# EUROPEAN PATENT APPLICATION

(11) **EP 4 621 008 A1**
(43) Date of publication of application: **24.09.2025**
(21) Application number: 23915650.8
(22) Date of filing: 19.10.2023
(51) Int. Cl.: C08L 65/00, C08G 61/08, B62D 35/00, B60H 3/00

(54) **LIGHTWEIGHT MATERIAL, PREPARATION METHOD FOR AIR DEFLECTOR, AIR DEFLECTOR ASSEMBLY, AND AUTOMOBILE**

(30) Priority: 13.01.2023 CN 202310060847
(71) Applicant: Zhejiang Geely Holding Group Co., Ltd., Hangzhou, Zhejiang 310000 (CN); Zhejiang Geely Farizon New Energy Commercial Vehicle Group Co., Ltd., Hangzhou, Zhejiang 310000 (CN); Zhejiang Farizon Commercial Vehicles Research and Development Co., Ltd., Hangzhou, Zhejiang 310000 (CN)
(72) Inventor: JIN, Quanjun, Hangzhou, Zhejiang 310000 (CN); GAO, Ming, Hangzhou, Zhejiang 310000 (CN); LV, Lingfang, Hangzhou, Zhejiang 310000 (CN); CHEN, Shisheng, Hangzhou, Zhejiang 310000 (CN); LI, Ming, Hangzhou, Zhejiang 310000 (CN); YANG, Guang, Hangzhou, Zhejiang 310000 (CN); TIAN, Yazhe, Hangzhou, Zhejiang 310000 (CN)
(74) Representative: Elzaburu S.L.P.
(86) International application number: PCT/CN2023/125470
(87) International publication number: WO 2024/148892

(57) **Abstract**

Disclosed are a lightweight material, a method for producing air deflector, an air deflector assembly (100), and a vehicle. The lightweight material includes a first composite; and a second composite. Taking a mass of the first composite as 100%, the first composite includes 85% to 95% of a first compound, 3% to 10% of a first main catalyst and 2% to 5% of a second main catalyst, and the first compound includes a polydicyclopentadiene; and taking a mass of the second composite as 100%, the second composite includes 85% to 95% of a second compound, 2% to 8% of a first sub catalyst and 3% to 7% of a second sub catalyst, and the second compound includes the polydicyclopentadiene.

## Description

### CROSS-REFERENCE TO RELATED APPLICATIONS

The present application claims priority to Chinese Patent Application No. 202310060847.8 filed on January 13, 2023, the entire contents of which are incorporated herein by reference.

### TECHNICAL FIELD

The present application relates to the technical field of air deflector, and in particular to a lightweight material, a method for producing air deflector, an air deflector assembly, and a vehicle.

### BACKGROUND

Lightweight new materials are an inevitable trend for vehicle lightweighting and are also the most direct and effective method. Suitable materials are used in suitable parts. Plastics and their composite materials have the advantages of easy molding, low density, and high specific strength. Therefore, they are the best choice for new lightweight materials for vehicles. Currently, vehicle exterior parts are often made from fiberglass-reinforced plastic (FRP) composites, such as the sheet molding compound (SMC), which is a thermosetting sheet molding material composed of glass fibers reinforcing unsaturated polyester, epoxy, or phenolic resin matrices.

### SUMMARY

The material has been widely used in commercial vehicles, and the usage of which can reach 200kg to 250kg per vehicle, accounting for about 20% to 30% of the weight of the cab, resulting in a heavy weight of the entire vehicle, which does not conform to the lightweight concept.

The main purpose of the present application is to provide a lightweight material, a method for producing air deflector, an air deflector assembly and a vehicle, aiming to solve the problem that the weight of vehicle exterior materials in the related art is heavy and does not conform to the lightweight concept.

To achieve the above purpose, the present application provides a lightweight material, including a first composite and a second composite.

Taking a mass of the first composite as 100%, the first composite includes 85% to 95% of a first compound, 3% to 10% of a first main catalyst and 2% to 5% of a second main catalyst, and the first compound includes a polydicyclopentadiene; and
taking a mass of the second composite as 100%, the second composite includes 85% to 95% of a second compound, 2% to 8% of a first sub catalyst and 3% to 7% of a second sub catalyst, and the second compound includes the polydicyclopentadiene.

In an embodiment, a volume ratio of the first composite to the second composite is (0.92:1) to (1:0.89).

In an embodiment, the first main catalyst includes a tungsten-based catalyst, and the tungsten-based catalyst includes a tungsten chloride; and/or
the second main catalyst includes a first phenol compound, and the first phenol compound includes a tetrachlorophenol.

In an embodiment, the first sub catalyst includes an aluminum-based metal compound, and the aluminum-based metal compound includes an aluminum alkyl; and/or
the second sub catalyst includes a second phenol compound, and the second phenol compound includes a tetrachlorophenol.

The present application also provides a method for producing an air deflector, the air deflector is made from the lightweight material, and the method for producing the air deflector includes:
mixing a first compound, a first main catalyst and a second main catalyst to obtain a first composite;
mixing a second compound, a first sub catalyst and a second sub catalyst to obtain a second composite;
mixing the first composite and the second composite to obtain a mixed material liquid; and
injecting the mixed material liquid into a mold, filling the mold, dwelling in the mold and curing in sequence to obtain the air deflector.

In an embodiment, a reaction temperature of the first composite obtained by mixing the first compound, the first main catalyst and the second main catalyst is 20°C to 25°C; and/or
a reaction temperature of the second composite obtained by mixing the second compound, the first sub catalyst and the second sub catalyst is 20°C to 25°C.

In an embodiment, the mixing the first composite and the second composite to obtain the mixed material liquid includes:
under a condition of 20° C to 25° C and 10MPa to 12MPa, flowing the first composite and the second composite to a mixing instrument at a flow rate of 40L/min to 70L/min, stirring and mixing, and obtaining the mixed material liquid.

In an embodiment, the mold includes a male mold and a female mold; and
the injecting the mixed material liquid into the mold, filling the mold, dwelling in the mold and curing in sequence to obtain the air deflector includes:
under a condition of 0.3MPa to 0.6MPa, injecting the mixed material liquid into a molding chamber of the mold, waiting for 20s to 25s, and stopping injecting;
adjusting a deflection angle of the mold to 45° to 55° at a vibration frequency of 10Hz to 20Hz, and waiting for 250s to 300; and
decreasing a temperature of the male mold to 60°C to 70°C and a temperature of the female mold to 70°C to 80°C, adjusting a deflection angle of the mold to 45° to 55° at the vibration frequency of 10Hz to 20Hz, waiting for 100s to 180s, and obtaining the air deflector.

The present application also provides an air deflector assembly, including:
a top air deflector;
two upper air deflectors opposite to each other, one end of each of the two upper air deflectors is fixedly connected to two ends of the top air deflector respectively; and
two lower air deflectors opposite to each other, each of the two lower air deflectors is fixedly connected to the other end of each of the two upper air deflectors respectively;
all of the top air deflector, the two upper air deflectors and the two lower air deflectors are made from the lightweight material according to any one of claims 1 to 4; or
all of the top air deflector, the two upper air deflectors and the two lower air deflectors are made by the method for producing the air deflector.

In an embodiment, the top air deflector includes a first inner plate and a first outer plate glued to the first inner plate,
one side of the first outer plate towards the first inner plate is provided with a first reinforcement rib extending along a force transferring route of the first outer plate, a plurality of first connection reinforcement plates are provided at both ends of the first outer plate along a length direction of the first outer plate, and a plurality of first bracket reinforcement plates are provided at one end of both ends of the first outer plate along a width direction of the first outer plate; and
the first inner plate is provided with a first recessed groove matched with the first reinforcement rib, a second bracket reinforcement plate corresponding to the first bracket reinforcement plate is provided at one end of both ends of the first inner plate along a width direction of the first inner plate, and a plurality of third bracket reinforcement plates are provided at the other end of both ends of the first inner plate.

In an embodiment, the two upper air deflectors include a left upper air deflector and a right upper air deflector, the left upper air deflector includes a second outer plate and a second inner plate glued to the second outer plate, and the right upper air deflector includes a third outer plate and a third inner plate glued to the third outer plate.

In an embodiment, the second outer plate is provided with two second reinforcement ribs extending along a length direction of the second outer plate and a plurality of third reinforcement ribs extending along a width direction of the second outer plate, the two second reinforcement ribs are provided at intervals, the plurality of third reinforcement ribs are provided at intervals between the two second reinforcement ribs, and a plurality of second connection reinforcement plates are provided at both ends of the second outer plate extending along the length direction of the second outer plate; and/or
the second inner plate is provided with a second recessed groove extending along a force transferring route of the second inner plate, the second recessed groove is enclosed to form a force-bearing area, and the force-bearing area is provided with a plurality of fourth reinforcement ribs extending along a width direction of the second inner plate.

In an embodiment, the third outer plate includes a first connection plate and a second connection plate provided along a length direction of the third outer plate, and a radiator grille is provided at the first connection plate;
the second connection plate is provided with two fifth reinforcement ribs provided at intervals and extending along a length direction of the second connection plate, and a plurality of sixth reinforcement ribs extending along a width direction of the second connection plate;
the plurality of sixth reinforcement ribs are provided at intervals between the two fifth reinforcement ribs, and a plurality of third connection reinforcement plates are provided at opposite ends of the first connection plate and the second connection plate; and/or
the third inner plate includes a horizontal plate extending along a width direction of the third outer plate, a third connection plate and a vertical plate, and a first reinforcement slot is formed on the horizontal plate and extends along a width direction of the horizontal plate;
the third connection plate is provided with two second reinforcement slots provided at intervals and extending along a length direction of the third connection plate, and a plurality of third reinforcement slots extending along a width direction of the third connection plate and provided at intervals between the two second reinforcement slots; and
the vertical plate extends along a length direction of the third outer plate and is connected between the horizontal plate and the third connection plate, and the vertical plate is provided with a plurality of seventh reinforcement ribs extending along a width direction of the vertical plate.

In an embodiment, each of the lower air deflectors includes a fourth outer plate and a fourth inner plate glued to the fourth outer plate;
the fourth outer plate is provided with two eighth reinforcement ribs extending along a length direction of the fourth outer plate and provided at intervals and two ninth reinforcement ribs provided at intervals along a width direction of the fourth outer plate, one of the two ninth reinforcement ribs is connected to ends of the two eighth reinforcement ribs, and the other one of the two ninth reinforcement ribs is connected to a middle of the two eighth reinforcement ribs; and
the fourth inner plate is provided with a fourth recessed groove corresponding to the two eighth reinforcement ribs and the two ninth reinforcement ribs, and the fourth recessed groove is provided with a plurality of fourth bracket reinforcement plates provided at intervals.

The present application also provides a vehicle, including the air deflector assembly. The air deflector assembly includes a top air deflector; two upper air deflectors opposite to each other, one end of each of the two upper air deflectors is fixedly connected to two ends of the top air deflector respectively; and two lower air deflectors opposite to each other, each of the two lower air deflectors is fixedly connected to the other end of each of the two upper air deflectors respectively.

In the technical solution of the present application, the polydicyclopentadiene (PDCPD) is used as a substrate, and the PDCPD is modified to obtain the modified PDCPD (i.e., the first composite and the second composite) to replace the SMC material in the traditional material. The PDCPD is a cross-linked three-dimensional network structure engineering plastic with a density of only 1.03g/cm3 and excellent mechanical properties. After the PDCPD is modified, it has more superior comprehensive mechanical properties on the basis of maintaining the original performance, improves the quality of the lightweight material, and ensures that the lightweight material has sufficient rigidity and strength on the basis of meeting the lightweight requirement. At the same time, the PDCPD can be recycled, and the production process is environmentally friendly, with little pollution to the environment, which is beneficial to the development of the ecological environment.

### BRIEF DESCRIPTION OF THE DRAWINGS

In order to illustrate the technical solutions in the embodiments of the present application or in the related art more clearly, the following briefly introduces the accompanying drawings required for the description of the embodiments or the related art. Obviously, the drawings in the following description are only part of embodiments of the present application. For those skilled in the art, other drawings can also be obtained according to the structures shown in these drawings without any creative effort.
FIG. 1 is a flow chart of a method for producing an air deflector according to an embodiment of the present application.
FIG. 2 is a schematic structural diagram of an air deflector assembly according to an embodiment of the present application.
FIG. 3 is a schematic structural diagram of a first outer plate in FIG. 2.
FIG. 4 is a schematic structural diagram of a first inner plate in FIG. 2.
FIG. 5 is a schematic structural diagram of a second outer plate in FIG. 2.
FIG. 6 is a schematic structural diagram of a second inner plate in FIG. 2.
FIG. 7 is a schematic structural diagram of a third outer plate in FIG. 2.
FIG. 8 is a schematic structural diagram of a third inner plate in FIG. 2.
FIG. 9 is a schematic structural diagram of a fourth outer plate in FIG. 2.
FIG. 10 is a schematic structural diagram of a fourth inner plate in FIG. 2.
FIG. 11 is a schematic diagram of an appearance of a top air deflector according to an embodiment of the present application.
FIG. 12 is a schematic diagram of the appearance of the top air deflector according to a comparative example of the present application.
FIG. 13 is a maximum stress cloud diagram of the air deflector assembly according to an embodiment of the present application.
FIG. 14 is an X-axis vibration cloud diagram of the air deflector assembly according to an embodiment of the present application.
FIG. 15 is a Y-axis vibration cloud diagram of the air deflector assembly according to an embodiment of the present application.
FIG. 16 is a Z-axis vibration cloud diagram of the air deflector assembly according to an embodiment of the present application.

Description of reference signs:

| reference sign | name | reference sign | name |
|---|---|---|---|
| 100 | air deflector assembly | 312 | second connection plate |
| 1 | top air deflector | 313 | fifth reinforcement rib |
| 11 | first outer plate | 314 | sixth reinforcement rib |
| 111 | first reinforcement rib | 315 | third connection reinforcement plate |
| 112 | first connection reinforcement plate | 32 | third inner plate |
| 113 | first bracket reinforcement plate | 321 | horizontal plate |
| 12 | first inner plate | 322 | third connection plate |
| 121 | first recessed groove | 323 | vertical plate |
| 122 | second bracket reinforcement plate | 324 | first reinforcement slot |
| 123 | third bracket reinforcement plate | 325 | second reinforcement slot |
| 2 | left upper air deflector | 326 | third reinforcement slot |
| 21 | second outer plate | 327 | seventh reinforcement rib |
| 211 | second reinforcement rib | 328 | third recessed groove |
| 212 | third reinforcement rib | 4 | lower air deflector |
| 213 | second connection reinforcement plate | 41 | fourth outer plate |
| 22 | second inner plate | 411 | eighth reinforcement rib |
| 221 | second recessed groove | 412 | ninth reinforcement rib |
| 222 | fourth reinforcement rib | 42 | fourth inner plate |
| 3 | right upper air deflector | 421 | fourth recessed groove |
| 31 | third outer plate | 422 | fourth bracket reinforcement plate |
| 311 | first connection plate | 423 | fourth connection reinforcement plate |
| 3111 | radiator grille | | |

### DETAILED DESCRIPTION OF THE EMBODIMENTS

The technical solutions of the embodiments of the present application will be described in more detail below with reference to the accompanying drawings. It is obvious that the embodiments to be described are only some rather than all of the embodiments of the present application. All other embodiments obtained by those skilled in the art based on the embodiments of the present application without creative efforts shall fall within the scope of the present application.

It should be noted that if there are directional indications, such as up, down, left, right, front, back, etc., involved in the embodiments of the present application, the directional indications are only used to explain a certain posture as shown in the accompanying drawings. If the specific posture changes, the directional indication also changes accordingly.

In addition, if there are descriptions related to "first", "second", etc. in the embodiments of the present application, the descriptions of "first", "second", etc. are only for the purpose of description, and should not be construed as indicating or implying relative importance or implicitly indicates the number of technical features indicated. Thus, a feature delimited with "first", "second" may expressly or implicitly include at least one of that feature. Besides, the meaning of "and/or" appearing in the application includes three parallel scenarios. For example, "A and/or B" includes only A, or only B, or both A and B. In addition, the technical solutions between the various embodiments can be combined with each other, but must be based on the realization by those skilled in the art. When the combination of technical solutions is contradictory or cannot be realized, it should be considered that the combination of such technical solutions does not exist or falls within the scope of protection claimed in the present application.

Lightweight new materials are an inevitable trend for vehicle lightweighting and are also the most direct and effective method. Suitable materials are used in suitable parts. Plastics and their composite materials have the advantages of easy molding, low density, and high specific strength. Therefore, they are the best choice for new lightweight materials for vehicles. Currently, vehicle exterior parts are often made from fiberglass-reinforced plastic (FRP) composites, such as the sheet molding compound (SMC), which is a thermosetting sheet molding material composed of glass fibers reinforcing unsaturated polyester, epoxy, or phenolic resin matrices. The material has been widely used in commercial vehicles, and its usage can reach 200kg to 250kg per vehicle, accounting for about 20% to 30% of the weight of the cab, resulting in a heavy weight of the entire vehicle, which does not conform to the lightweight concept.

In view of this, the present application provides a lightweight material. The lightweight material provided by the present application adopts modified polydicyclopentadiene (PDCPD) plastic steel material to replace the SMC. On the basis of meeting the lightweight requirement of the product, the structural optimization method is studied to achieve the stiffness and strength performance of the parts to meet the design requirements; on the basis of the reaction injection molding preparation process, the process method is developed to improve the quality of the product, and finally the lightweight of the product is achieved. The following is mainly about the lightweight material.

Specifically, the lightweight material includes a first composite and a second composite. Taking the mass of the first composite as 100%, the first composite includes 85% to 95% of the first compound, 3% to 10% of the first main catalyst and 2% to 5% of the second main catalyst, and the first compound includes the PDCPD. Taking the mass of the second composite as 100%, the second composite includes 85% to 95% of the second compound, 2% to 8% of the first sub catalyst and 3% to 7% of the second sub catalyst, and the second compound includes the PDCPD.

In the technical solution of the present application, the polydicyclopentadiene (PDCPD) is used as a substrate, and the PDCPD is modified to obtain the modified PDCPD (i.e., the first composite and the second composite) to replace the SMC material in the traditional material. The PDCPD is a cross-linked three-dimensional network structure engineering plastic with a density of only 1.03g/cm³ and excellent mechanical properties. After the PDCPD is modified, it has more superior comprehensive mechanical properties on the basis of maintaining the original performance, improves the quality of the lightweight material, and ensures that the lightweight material has sufficient rigidity and strength on the basis of meeting the lightweight requirement. At the same time, the PDCPD can be recycled, and the production process is environmentally friendly, with little pollution to the environment, which is conducive to the development of the ecological environment.

It should be noted that although the FRP composite plastics are widely used in the truck industry, the production and use process brings about health hazards and environmental pollution problems that cannot be ignored: (1) the glass fiber in the FRP composite plastics directly contacts the skin and can cause skin itching and allergic dermatitis; (2) the FRP products require manual grinding during production, and the grinding process produces a large amount of glass fiber and resin dust, which is easily inhaled into the lungs and harms health; (3) the FRP products release a large amount of organic matter such as benzene during production, which will cause great harm to the health of production operators and pollute the atmospheric environment. The modified PDCPD used in the present application is safe and reliable, does not have a grinding process, does not contain harmful substances, and has less harm to operators. In addition, the PDCPD can be recycled, and the production process is environmentally friendly, with little pollution to the environment, which is beneficial to the development of the ecological environment.

In order to ensure that the first composite and the second composite have good chemical activity, in the preparation process, the first composite and the second composite are first measured by the metering system and obtained according to the volume requirements, and the first composite and the second composite are measured and output by the measuring pump. At the same time, during mixing, the ratio of the first composite and the second composite is strictly controlled, and the measurement accuracy of the first composite and the second composite is required to be at least within ±1%, that is, the error value of the volume of the first composite and the second composite needs to be within ±1%. Specifically, in some embodiments, the volume ratio of the first composite and the second composite is (0.92:1) to (1:0.89). Mixing according to the above ratio can ensure that the first composite and the second composite have good chemical activity, and ensure that the lightweight material finally obtained can have better comprehensive performance. More specifically, in an embodiment, every 0.92L of the first composite needs to be mixed with 1L of the second composite.

Specifically, in some embodiments, the first main catalyst includes a tungsten-based catalyst. The specific type of the tungsten-based catalyst is not limited, as long as it can catalyze and will not react with the first compound. Specifically, in this embodiment, the tungsten-based catalyst is the tungsten chloride.

Similarly, in some embodiments, the second main catalyst includes a first phenol compound. The specific type of the first phenol compound is not limited, as long as it can catalyze and will not react with the first compound. Specifically, in this embodiment, the first phenol compound is the tetrachlorophenol.

Specifically, in some embodiments, the first sub catalyst includes an aluminum-based metal compound. The specific type of the aluminum-based metal compound is not limited, as long as it can catalyze and will not react with the second compound. Specifically, in this embodiment, the aluminum-based metal compound is the aluminum alkyl.

Similarly, in some embodiments, the second sub catalyst includes a second phenol compound. The specific type of the second phenol compound is not limited, as long as it can catalyze and will not react with the second compound. Specifically, in this embodiment, the second phenol compound includes the tetrachlorophenol.

It should be noted that the above materials can be purchased on the market. The descriptions involving "first" and "second" are only for descriptive purposes and cannot be understood as indicating or implying their relative importance or implicitly indicating the number of technical features indicated. Taking the first phenol compound and the second phenol compound as an example, here, the first and the second are only to distinguish the specific types of compounds added to the two composites, that is, the phenol compound used in the first composite and the phenol compound in the second composite can be the same type of phenol compound or different types of phenol compounds, and the two are independently selected when selecting materials. In an embodiment, the first phenol compound and the second phenol compound are both tetrachlorophenol.

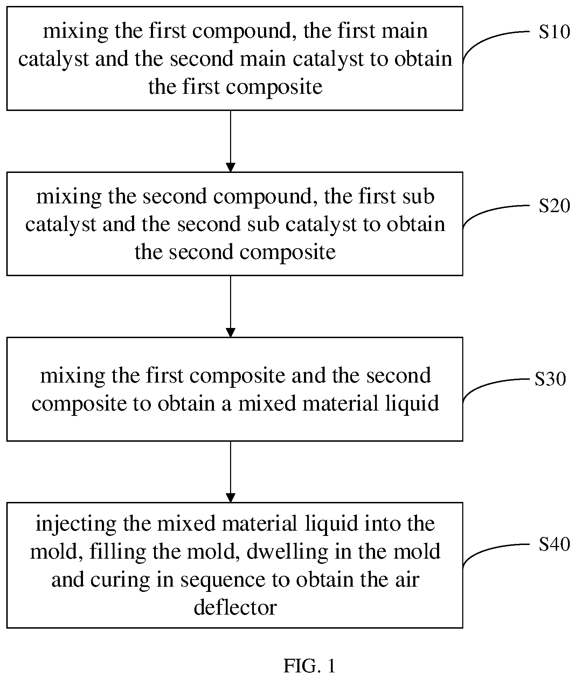

Referring to FIG. 1, the present application also provides a method for producing the air deflector, which is configured for preparing the above lightweight material. The method for producing the air deflector includes the following production steps:
Step S10, mixing the first compound, the first main catalyst and the second main catalyst to obtain the first composite.

When performing step S10, it is necessary to control the reaction temperature to ensure that the first composite has sufficient chemical activity, avoid the decomposition of the first compound due to excessive temperature, or avoid the failure of the first main catalyst and the second main catalyst due to excessive temperature. Therefore, in this embodiment, the first compound, the first main catalyst and the second main catalyst are mixed to obtain a reaction temperature of the first composite of 20° C to 25° C. Specifically, in actual operation, when preparing the first composite, the following steps can be followed: according to weight percentage, 85% to 95% of the first compound, 3% to 10% of the first main catalyst and 2% to 5% of the second main catalyst are weighed in sequence through a hydraulic system. Under the condition of 20° C to 25° C, the first compound, the first main catalyst and the second main catalyst are placed in three measuring pumps, and the above substances are metered and output through the three measuring pumps and input into the mixing bowl. At the same time, during the input process, in order to ensure sufficient mixing of the raw materials, the above raw materials are input into the mixing bowl while stirring, so that the first compound, the first main catalyst and the second main catalyst can be fully contacted, which ensures that the prepared first composite material has sufficient chemical activity.

Step S20, mixing the second compound, the first sub catalyst and the second sub catalyst to obtain the second composite.

Similarly, when performing step S20, it is also necessary to control the temperature to ensure that the second composite has sufficient chemical activity, avoid the decomposition of the second compound due to excessively high temperature, and avoid the failure of the first sub catalyst and the second sub catalyst due to excessively high temperature. Therefore, in this embodiment, the reaction temperature of the second composite obtained by mixing the second compound, the first sub catalyst and the second sub catalyst is 20° C to 25° C. Specifically, in actual operation, when preparing the second composite, the following steps can be followed: according to weight percentage, 85% to 95% of the second compound, 2% to 8% of the first sub catalyst and 3% to 7% of the second sub catalyst are weighed in sequence through a hydraulic system. Under the condition of 20° C to 25° C, the second compound, the first sub catalyst and the second sub catalyst are placed in three measuring pumps, and the above substances are metered and output through the three measuring pumps and input into the mixing bowl. At the same time, during the input process, in order to ensure sufficient mixing of the raw materials, the above raw materials are input into the mixing bowl while stirring, so that the second compound, the first sub catalyst and the second sub catalyst can be fully contacted, ensuring that the prepared second composite has sufficient chemical activity.

Step S30, mixing the first composite and the second composite to obtain a mixed material liquid.

It should be noted that if the first composite and the second composite are directly injected into the molding chamber, the first composite and the second composite will be unevenly distributed, resulting in poor performance of the prepared air deflector. In order to ensure the uniformity of the material distribution of the prepared air deflector, the first composite and the second composite need to be mixed first. During the mixing process, the uniformity of the distribution of the first composite and the second composite should be considered, and it is necessary to ensure that the first composite and the second composite will not undergo polymerization. Therefore, when performing step S30, a low-pressure molding process is adopted. Specifically, in actual operation, Under the condition of 20° C to 25° C, the first composite and the second composite are injected into two injection machines, the pressure of the injection machines is adjusted to 10MP to 12MP, and the flow rate is adjusted to 40L/min to 70L/min. The two injection machines simultaneously inject the first composite and the second composite into the mixing instrument at 40L/min to 70L/min. At the same time, during the injection process, stirring is required to make the first composite and the second composite be fully contacted and evenly distributed, thereby obtaining the mixed material liquid.

Step S40, injecting the mixed material liquid into the mold, filling the mold, dwelling in the mold and curing in sequence to obtain the air deflector.

It should be noted that the mold includes a male mold and a female mold.

It should be noted that, when the mixed material liquid is filling the mold, the filling pressure has a great influence on the flow morphology of the material flow in the molding chamber. The injection pressure should be reasonably adjusted to make the flow state of the material flow a stable spreading flow. The filling the mold injection pressure is set to 0.3MPa to 0.6MPa, and the filling the mold time is 20s to 25s, so that the reaction compound can quickly and steadily fill the entire cavity. When the mixed material liquid is injected into the molding chamber, due to the poor thermal conductivity of the plastic, a large amount of reaction heat makes the temperature of the molding chamber reach up to 200°C. In this case, the mold needs to exchange heat to dissipate the heat generated by the polymerization reaction so that the maximum temperature of the molding chamber of the mold is controlled below the thermal decomposition temperature of the resin. Dwelling in the mold for 250s to 300s will quickly decrease the temperature of the molding chamber to the demolding temperature (that is, the temperature of the female mold is 60°C to 70°C, the temperature of the female mold is 70°Cto 80°C). Curing for 100s to 180s is to prevent the air deflector from deforming after demolding, so that during the preparation process, the mixed material liquid needs to fill the entire molding chamber and cured.

Furthermore, during the two preparation processes of filling the mold and curing, it is necessary to add deflection vibration of the mold equipment, the main purpose of which is to prevent bubbles appearing on the surface of the prepared air deflector, and prevent affecting the strength and rigidity of the air deflector, as well as the surface appearance quality of the air deflector. Therefore, during step S40, in order to ensure the performance of the finally prepared air deflector, the deflection angle of the mold will be adjusted to 45° to 55° during the filling the mold and curing process, so as to ensure that the mold has a sufficient tilt angle to facilitate the removal of pores. At the same time, the control of the work surface with a vibration frequency of 10Hz to 20Hz is increased, the overflow of the internal pores is increased, and the internal bubbles of the finally prepared air deflector is decreased, thus improving the quality of the air deflector.

Specifically, when performing step S40, the following steps can be followed:
Step S401, injecting the mixed material liquid into the molding chamber of the mold under the condition of 0.3MPa to 0.6MPa, waiting for 20s to 25s, and stop injecting;
Step S402, adjusting the deflection angle of the mold to 45° to 55° at a vibration frequency of 10Hz to 20Hz, and waiting for 250s to 300;
Step S403, decreasing the temperature of the male mold to 60°C to 70°C, decreasing the temperature of the female mold to 70°C to 80°C, adjusting the deflection angle of the mold to 45° to 55° at the vibration frequency of 10Hz to 20Hz, waiting for 100s to 180s, and obtaining the air deflector.

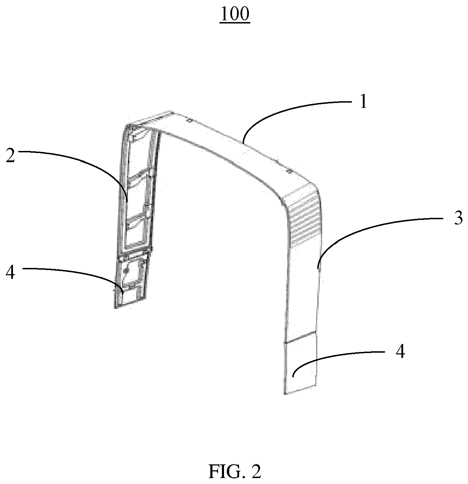

Referring to FIG. 2 to FIG. 10, the present application also provides an air deflector assembly 100.

It should be noted that, for the convenience of description, in the present application, all length directions, width directions and thickness directions take the first outer plate 11 as the reference. Taking the second inner plate 22 as an example, the length direction of the second inner plate 22 is the length direction of the first outer plate 11, and the width direction of the second inner plate 22 is the length direction of the first outer plate 11.

Referring to FIG. 2, the air deflector assembly 100 includes a plurality of air deflectors, specifically including a top air deflector 1, two upper air deflectors opposite to each other and two lower air deflectors 4 opposite to each other. One end of the two upper air deflectors is respectively fixedly connected to the two ends of the top air deflector 1; and each lower air deflector 4 is respectively fixedly connected to the other end of each upper air deflector. The top air deflector 1, the two upper air deflectors and the two lower air deflectors 4 are all prepared through the above-mentioned method for producing the air deflector.

The air deflector assembly 100 provided in the present application has sufficient rigidity and strength, and its mechanical properties meet the process requirements. The base material is the modified PDCPD, and the modified PDCPD has more superior comprehensive mechanical properties while maintaining the original performance, thereby improving the quality of the air deflector assembly 100, and ensuring that the air deflector assembly 100 has sufficient rigidity and strength while meeting the requirements of lightweight. At the same time, the PDCPD can be recycled, and the production process is environmentally friendly, with little pollution to the environment, which is beneficial to the development of the ecological environment.

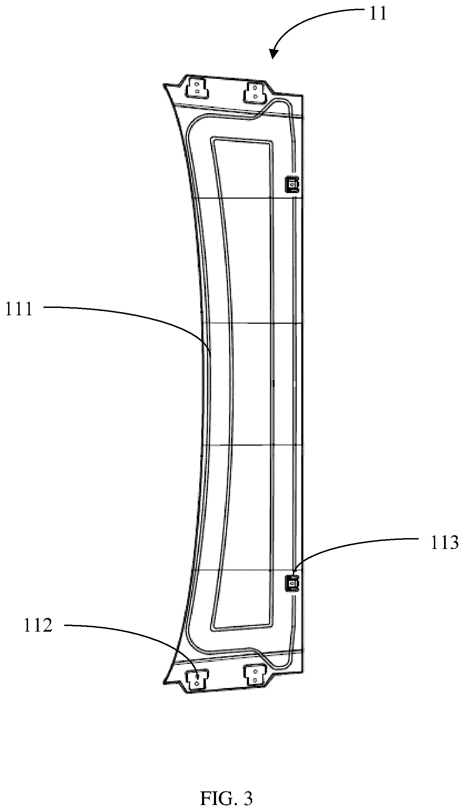

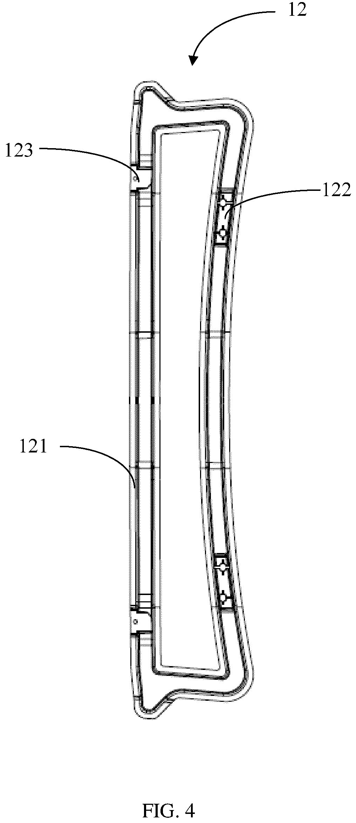

Referring to FIG. 3 and FIG. 4, the top air deflector 1 includes a first inner plate 12 and a first outer plate 11 glued to the first inner plate 12. A first reinforcement rib 111 is provided on a side of the first outer plate 11 towards the first inner plate 12, and the first reinforcement rib 111 extends along a force transferring route of the first outer plate 11. In order to ensure that the strength of the connection between the top air deflector 1 and the car body meets the process requirements, a plurality of first connection reinforcement plates 112 are provided at both ends of the first outer plate 11 in the length direction, and a plurality of first bracket reinforcement plates 113 are provided at one of the two ends of the first outer plate 11 in the width direction. The first inner plate 12 is provided with a first recessed groove 121 matched with the first reinforcement rib 111, a second bracket reinforcement plate 122 corresponding to the first bracket reinforcement plate 113 is provided at one of the two ends of the first inner plate 12 in the width direction, and a plurality of third bracket reinforcement plates 123 are provided at the other end of the two ends of the first inner plate 12 in the width direction. It should be noted that the function of the first bracket reinforcement plate 113 is to ensure the strength and rigidity of the top air deflector 1 when connected to the car body. Furthermore, in actual application, the function of the first bracket reinforcement plate 113 is to facilitate the connection of the left upper deflector. Therefore, it is necessary to pre-embed a first nut with a strength grade of 6 inside each first bracket reinforcement plate 113. Specifically, the diameter of the first nut is 8mm.

It should be noted that the force transferring route is the process of force transmission in the structure. Strictly speaking, it is the main stress trace generated during the force transmission process. In this embodiment, the force transferring route of the first outer plate 11 is the side of the first outer plate, so that the first reinforcement rib 111 is provided around the side of the first outer plate 11. In this way, the force transmission can maintain a continuous force flow and avoid excessive local force, which otherwise may lead to bending deformation. At the same time, setting the force transferring route to the shortest can also decrease the weight of the top air deflector 1, so that the top air deflector 1 has strong rigidity and strength.

Specifically, in some embodiments, the thickness of the first outer plate 11 is 3mm to 5mm; the thickness of the first inner plate 12 is 5mm to 8mm; the width of the first reinforcement rib 111 is 20mm to 30mm, and the height of the first reinforcement rib 111 is 0.3mm to 0.5mm; the length of the first bracket reinforcement plate 113 is 15mm to 20mm, the width of the first bracket reinforcement plate 113 is 15mm to 20mm, the height of the first bracket reinforcement plate 113 is 8mm to 10mm, and the wall thickness of the first bracket reinforcement plate 113 is 5mm; based on the stiffness requirement, the width of the first recessed groove 121 is 20mm to 30mm, the groove depth is 8mm to 10mm, and the groove wall thickness is 0.8mm to 1mm. In an embodiment, the thickness of the first outer plate 11 is 6mm; the thickness of the first inner plate 12 is 7mm; the width of the first reinforcement rib 111 is 25mm, and the height of the first reinforcement rib 111 is 0.4mm; the length of the first bracket reinforcement plate 113 is 18mm, the width of the first bracket reinforcement plate 113 is 18mm, the height of the first bracket reinforcement plate 113 is 9mm, and the wall thickness of the first bracket reinforcement plate 113 is 5mm; the length of the first recessed groove 121 is 25mm, the groove depth of the first recessed groove 121 is 9mm, and the wall thickness of the first recessed groove 121 is 0.9mm.

Referring to FIG. 3 and FIG. 4, the first connection reinforcement plate 112 includes a first support plate extending along the width direction of the first outer plate 11, and a second support plate extending along the length direction of the first outer plate 11. One end of the second support plate is fixedly connected to the center line of the first support plate. Specifically, in this embodiment, the first connection reinforcement plate 112 is set to a "T"-shaped structure to ensure the connection strength between the top air deflector 1 and the right upper air deflector 3. At the same time, it is necessary to pre-embed a first bolt with a strength grade of 6.8 in the first support plate, and the diameter of the first bolt is 8mm.

Further, in some embodiments, the width of the first support plate is 40mm to 50mm, the length of the first support plate is 3mm to 5mm, and the thickness of the first support plate is 30mm to 40mm; the width of the second support plate is 25mm to 30mm, the length of the second support plate is 20mm to 30mm, and the thickness of the second support plate is 3mm to 5mm. In an embodiment of the present application, the width of the first support plate is 45mm, the length of the first support plate is 4mm, and the thickness of the first support plate is 35mm; and the width of the second support plate is 28mm, the length of the second support plate is 25mm, and the thickness of the second support plate is 4mm.

Specifically, the number of the first connection reinforcement plate 112, the first bracket reinforcement plate 113, and the second bracket reinforcement plate 122 is not limited and can be set according to specific process requirements. In an embodiment, four first connection reinforcement plates 112 are provided, and every two first connection reinforcement plates 112 are provided at intervals at both ends of the first outer plate 11 extending along the length direction thereof, respectively configured to connect with the left upper guide plate and the right upper guide plate. The number of the first bracket reinforcement plates 113 is two, and two first bracket reinforcement plates 113 are provided at intervals at one end of the first outer plate 11 along the width direction thereof, configured to connect with the second bracket reinforcement plate 122 on the first inner plate 12. Similarly, two third bracket reinforcement plates 123 are provided, and the two third bracket reinforcement plates 123 are provided at intervals, configured to connect with the car body.

Further, each of the third bracket reinforcement plates 123 is embedded with a second nut with a strength grade of 6, the diameter of the second nut is 8mm, and the second nut is configured to be fixed to the outer side of the car body bracket, so as to realize the connection between the top air deflector 1 and the car body cab.

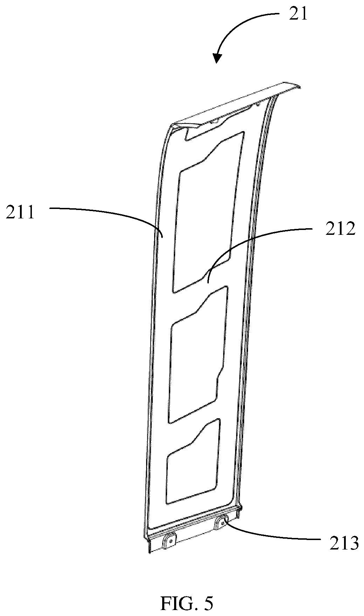

Referring to FIG. 5, FIG. 6, FIG. 7 and FIG. 8, in an embodiment, the two upper air deflectors include a left upper air deflector 2 and a right upper air deflector 3. The left upper air deflector 2 includes a second outer plate 21 and a second inner plate 22 glued to each other, and the right upper air deflector 3 includes a third outer plate 31 and a third inner plate 32 glued to each other.

Referring to FIG. 5, the second outer plate 21 is provided with two second reinforcement ribs 211 extending along the length direction thereof and a plurality of third reinforcement ribs 212 extending along the width direction thereof, the two second reinforcement ribs 211 are provided at intervals, and the plurality of third reinforcement ribs 212 are provided at intervals between the two second reinforcement ribs 211. A plurality of second connection reinforcement plates 213 are provided at both ends of the second outer plate 21 extending along the length direction thereof. Specifically, in this embodiment, the second reinforcement ribs 211 and the third reinforcement ribs 212 form a closed ladder-shaped structure, which is more stable and can not only ensure the strength of the second outer plate 21, but also decrease the weight of the second outer plate 21, thereby achieving lightweight.

Meanwhile, the number of the second connection reinforcement plate 213 is not limited and can be set according to the specific processing requirements. Specifically, in this embodiment, four second connection reinforcement plates 213 are provided, and every two second connection reinforcement plates 213 are provided at intervals at both ends of the second outer plate 21 extending along its length direction. The second connection reinforcement plate 213 on one end connected to the top air deflector 1 is pre-embedded with a third nut with a strength grade of 6, and the diameter of the third nut is 8mm. The second connection reinforcement plate 213 on one end connected to the lower air deflector 4 is pre-embedded with a second bolt with a strength grade of 6.5, and the diameter of the second bolt is 8mm.

Further, in some embodiments, the thickness of the second outer plate 21 is 3mm to 5mm; the thickness of the second inner plate 22 is 3mm to 5mm; the thickness of the second reinforcement rib 211 is 0.3mm to 0.5mm and the width of the second reinforcement rib 211 is 20mm to 30mm; the thickness of the third reinforcement rib 212 is 0.3mm to 0.5mm, and the width of the third reinforcement rib 212 is 20mm to 30mm; the length of the second connection reinforcement plate 213 is 25mm to 30mm, the width of the second connection reinforcement plate 213 is 30mm to 40mm, and the thickness of the second connection reinforcement plate 213 is 10mm. In an embodiment, the thickness of the second outer plate 21 is 4mm; the thickness of the second inner plate 22 is 4mm; the thickness of the second reinforcement rib 211 is 0.4mm and the width of the second reinforcement rib 211 is 25mm; the thickness of the third reinforcement rib 212 is 0.4mm and the width of the third reinforcement rib 212 is 25mm; and the length of the second connection reinforcement plate 213 is 28mm, the width of the second connection reinforcement plate 213 is 35mm, and the thickness of the second connection reinforcement plate 213 is 10mm.

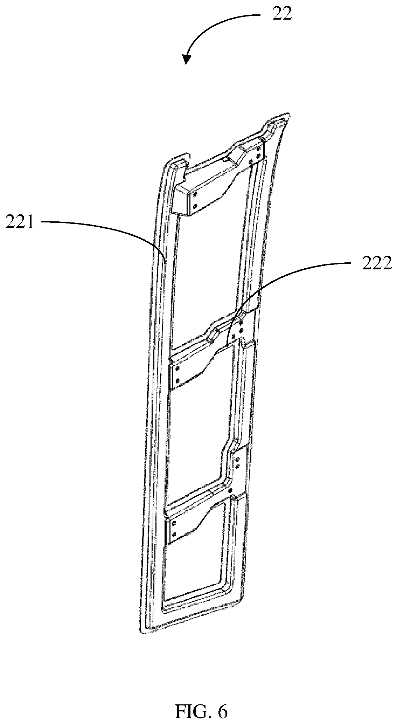

Referring to FIG. 6, in order to meet the rigidity requirement of the second inner plate 22, a second recessed groove 221 extending along the force transferring route of the second inner plate 22 is formed on the second inner plate 22. The second recessed groove 221 encloses a force-bearing area. A plurality of fourth reinforcement ribs 222 extending along the width direction of the second inner plate 22 are provided in the force-bearing area. It should be noted that the fourth reinforcement rib 222 is provided in the middle part of the second inner plate 22 to ensure that the strength and rigidity of the second inner plate 22 meet the requirements.

Further, in some embodiments, the groove width of the second recessed groove 221 is 20mm to 30mm, the groove depth of the second recessed groove 221 is 8mm to 10mm, and the groove wall thickness of the second recessed groove 221 is 0.8mm to 1mm; the length of the fourth reinforcement rib 222 is not less than 35mm, and the width of the fourth reinforcement rib 222 is not less than 100mm. In an embodiment, the width of the second recessed groove 221 is 25mm, the groove depth of the second recessed groove 221 is 9mm, and the groove wall thickness of the second recessed groove 221 is 0.9mm; the length of the fourth reinforcement rib 222 is 35mm and the width of the fourth reinforcement rib 222 is 100mm.

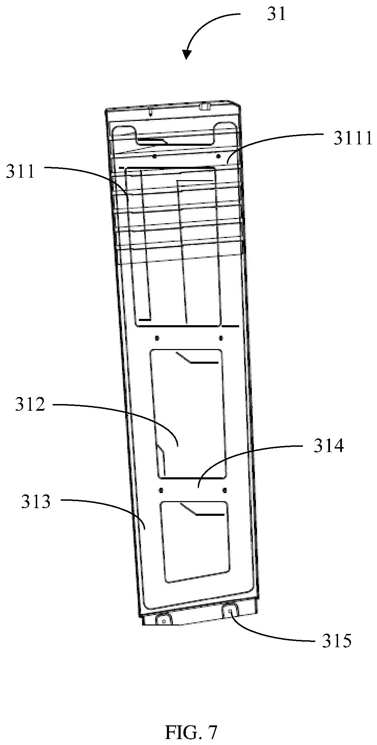

Referring to FIG. 7, the third outer plate 31 includes a first connection plate 311 and a second connection plate 312 provided along the length direction thereof, and a radiator grille 3111 is formed on the first connection plate 311. The second connection plate 312 is provided with two fifth reinforcement ribs 313 provided at intervals and extending along the length direction thereof, and a plurality of sixth reinforcement ribs 314 extending along the width direction thereof. The plurality of sixth reinforcement ribs 314 are provided at intervals between the two fifth reinforcement ribs 313, and a plurality of third connection reinforcement plates 315 are provided at two opposite ends of the first connection plate 311 and the second connection plate 312 (i.e., two ends of the third outer plate 31 extending along the length direction thereof). Specifically, in this embodiment, the fifth reinforcement rib 313 and the sixth reinforcement rib 314 form a closed ladder-shaped structure, and the purpose is to strengthen the strength of the third outer plate 31 while meeting the lightweight requirement of the third outer plate 31. The third connection reinforcement plate 315 is to ensure the connection strength of the third outer plate 31.

It should be noted that the number of the third connection reinforcement plate 315 is not limited and is set according to specific process requirements. In this embodiment, the number of the third connection reinforcement plate 315 is four, two third connection reinforcement plates 315 are spaced apart at one end of the third outer plate 31 for connecting with the top air deflector 1, and the other two third connection reinforcement plates 315 are spaced apart at one end of the third outer plate 31 for connecting with the lower air deflector 4. Furthermore, the structure of the third connection reinforcement plate 315 is similar to that of the second connection reinforcement plate 213, so the structure of the third connection reinforcement plate 315 can refer to the structure of the second connection reinforcement plate 213, and will not be repeated here.

Further, in some embodiments, due to the presence of the radiator grille 3111 on the third outer plate 31, the thickness of the third outer plate 31 is thicker than the thickness of the third inner plate 32. Specifically, the thickness of the third outer plate is 5mm to 7mm; the thickness of the third inner plate 32 is 3mm to 5mm. In an embodiment, the thickness of the third outer plate 31 is 6mm, and the thickness of the third inner plate 32 is 4mm.

Further, in some embodiments, the height of the fifth reinforcement rib 313 is not less than 0.6mm, and the width of the fifth reinforcement rib 313 is not less than 30mm; the height of the sixth reinforcement rib 314 is not less than 0.6mm, and the width of the sixth reinforcement rib 314 is not less than 30mm; the length of the third connection reinforcement plate 315 is 25mm to 30mm, the width of the third connection reinforcement plate 315 is 30mm to 40mm, and the thickness of the third connection reinforcement plate 315 is 10mm. In an embodiment, the height of the fifth reinforcement rib 313 is 0.6mm and the width of the fifth reinforcement rib 313 is 30mm; the height of the sixth reinforcement rib 314 is 0.6mm and the width of the sixth reinforcement rib 314 is 30mm; the length of the third connection reinforcement plate 315 is 28mm, the width of the third connection reinforcement plate 315 is 35mm, and the thickness of the third connection reinforcement plate 315 is 10mm.

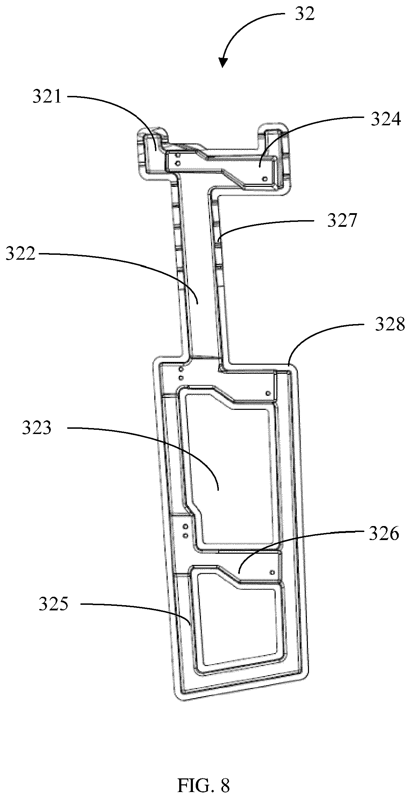

Referring to FIG. 8, the third inner plate 32 includes a horizontal plate 321, a third connection plate 322 and a vertical plate 323. The horizontal plate 321 is configured to extend along the width direction of the third outer plate 31, and a first reinforcement slot 324 extending along the width direction is formed on the horizontal plate 321. The third connection plate 322 is provided with two second reinforcement slots 325 spaced apart and extending along the length direction thereof, and a plurality of third reinforcement slots 326 extending along the width direction thereof. The plurality of third reinforcement slots 326 are spaced apart between the two second reinforcement slots 325. The vertical plate 323 is configured to extend along the length direction of the third outer plate 31 and is connected between the horizontal plate 321 and the third connection plate 322. A plurality of seventh reinforcement ribs 327 extending along the width direction thereof are formed on the vertical plate 323. In this embodiment, the horizontal plate 321, the third connection plate 322 and the vertical plate 323 together form a structure, which is designed to facilitate the heat dissipation of the radiator grille 3111 on the third outer plate 31. At the same time, in order to avoid affecting the strength of the left upper air deflector 2 due to the existence of the radiator grille 3111, the plurality of seventh reinforcement ribs 327 are provided on the vertical plate 323, and the tilted surface of the seventh reinforcement rib 327 is a 60° sawtooth shape, thereby ensuring the strength of the vertical plate 323. The first reinforcement slot 324, the second reinforcement slot 325 and the third reinforcement slot 326 are provided to ensure the strength of the right upper air deflector 3 when connected to the car body. Furthermore, the second reinforcement slot 325 and the third reinforcement slot 326 form a closed ladder-structure, which can not only ensure the strength of the third connection plate 322, but also meet the lightweight requirement.

It should be noted that the number of the seventh reinforcement rib 327 is not limited and can be selected according to actual needs. In this embodiment, five seventh reinforcement ribs 327 are provided at intervals along the length direction of the vertical plate 323 to ensure the strength of the vertical plate 323.

In order to ensure the connection strength of the third inner plate 32, the first reinforcement slot 324 and the third reinforcement slot 326 are both embedded with a fourth nut with a strength grade of 6, and the diameter of each fourth nut is 8mm.

Further, in some embodiments, the groove width of the first reinforcement slot 324 is not less than 30mm, and the groove wall thickness of the first reinforcement slot 324 is not less than 10mm; the groove width of the second reinforcement slot 325 is not less than 30mm, and the groove wall thickness of the second reinforcement slot 325 is not less than 10mm; the groove width of the third reinforcement slot 326 is not less than 30mm, and the groove wall thickness is not less than 10mm. In an embodiment, the groove width of the first reinforcement slot 324 is 30mm and the thickness of the first reinforcement slot 324 is 10mm; the groove width of the second reinforcement slot 325 is 30mm and the thickness of the second reinforcement slot 325 is 10mm; the groove width of the third reinforcement slot 326 is 30mm and the thickness of the third reinforcement slot 326 is 10mm.

Furthermore, in some embodiments, a third recessed groove 328 extending along the force transferring route of the third inner plate 32 is formed on the third inner plate 32. The groove width of the third recessed groove 328 is 20mm to 30mm, the groove depth of the third recessed groove 328 is 10mm to 12mm, and the groove wall thickness of the third recessed groove 328 is not less than 1mm. In an embodiment, the groove width of the third recessed groove 328 is 25mm, the groove depth of the third recessed groove 328 is 11mm, and the groove wall thickness of the third recessed groove 328 is 1mm.

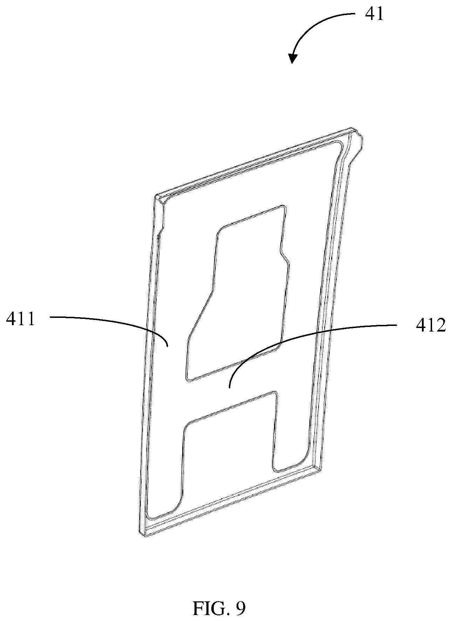

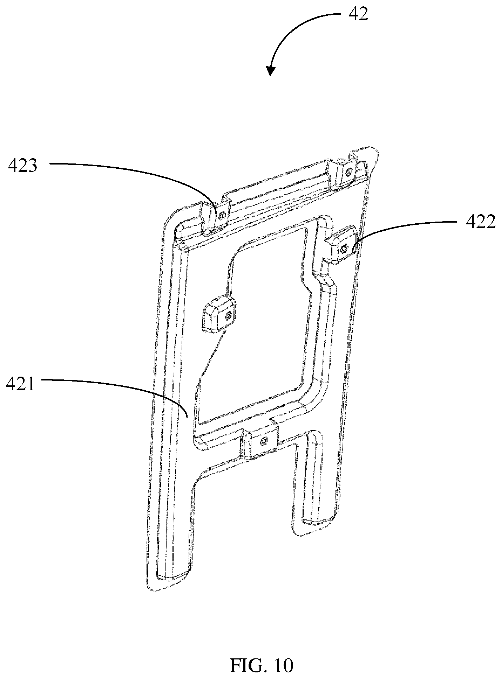

Referring to FIG. 9 and FIG. 10, each of the lower air deflectors 4 includes a fourth outer plate 41 and a fourth inner plate 42 glued to each other. The fourth outer plate 41 is provided with two eighth reinforcement ribs 411 spaced apart and extending along the length direction thereof, and two ninth reinforcement ribs 412 spaced apart along the width direction thereof. One of the ninth reinforcement ribs 412 is connected to ends of the two eighth reinforcement ribs 411, and the other is connected to middle portions of the two eighth reinforcement ribs 411. The fourth inner plate 42 is formed with fourth recessed grooves 421 corresponding to the eighth reinforcement ribs 411 and the ninth reinforcement ribs 412, and the fourth recessed grooves 421 are provided with a plurality of fourth bracket reinforcement plates 422 spaced apart. In this embodiment, since the lower air deflector 4 inner plate needs to be connected to the car body, it needs to meet the strength and rigidity requirements. Therefore, the eighth reinforcement rib 411 and the ninth reinforcement rib 412 are provided on the fourth inner plate 42. The eighth reinforcement rib 411 and the ninth reinforcement rib 412 form a structure, which not only to ensure the strength of the fourth outer plate 41, but also to achieve lightweight. Furthermore, the number of the fourth bracket reinforcement plates 422 is not limited and can be selected according to actual needs. There are three fourth bracket reinforcement plates 422, two of which are provided on the two eighth reinforcement ribs 411, and the other fourth bracket reinforcement plate 422 is provided on the ninth reinforcement rib 412 connected to the middle position of the two eighth reinforcement ribs 411. At the same time, in order to further strengthen the connection strength, the fourth bracket reinforcement plates 422 are pre-buried with a fifth nut with a strength grade of 6, and the diameter of the fifth nut is 8mm.

Further, in some embodiments, the thickness of the fourth outer plate 41 is 3mm to 5mm; the thickness of the fourth inner plate 42 is 3mm to 5mm; the groove width of the third recessed groove 328 is 15mm to 20mm, the groove depth of the third recessed groove 328 is 8mm to 10mm, and the groove wall thickness of the third recessed groove 328 is 0.8mm to 1mm; the width of the eighth reinforcement rib 411 is not less than 50mm and the height of the eighth reinforcement rib 411 is 0.4mm to 0.6mm; the length of the ninth reinforcement rib 412 is not less than 50mm and the height is 0.4mm to 0.6mm; the length of the fourth bracket reinforcement plate 422 is 15mm to 20mm, the width of the fourth bracket reinforcement plate 422 is 15mm to 20mm, and the thickness of the fourth bracket reinforcement plate 422 is 8mm to 10mm. In an embodiment, the thickness of the fourth outer plate 41 is 4mm; the thickness of the fourth inner plate 42 is 4mm; the groove width of the third recessed groove 328 is 18mm, the groove depth of the third recessed groove 328 is 9mm, and the groove wall thickness of the third recessed groove 328 is 0.9mm; the width of the eighth reinforcement rib 411 is 50mm, and the height of the eighth reinforcement rib 411 is 0.5mm; the width of the ninth reinforcement rib 412 is 50mm, and the height of the ninth reinforcement rib 412 is 0.5mm; the length of the fourth bracket reinforcement plate 422 is 18mm, the width of the fourth bracket reinforcement plate 422 is 18mm, and the thickness of the fourth bracket reinforcement plate 422 is 9mm.

Referring to FIG. 9, the fourth inner plate 42 is provided with a plurality of fourth connection reinforcement plates 423 at one end of the two ends along the length direction thereof. The width of the fourth connection reinforcement plate 423 is 20mm to 25mm, the length of the of the fourth bracket reinforcement plate 422 is 20mm to 25mm, and the thickness of the fourth bracket reinforcement plate 422 is 3mm to 5mm. In this embodiment, the number of the fourth connection reinforcement plate 423 is two, and the two fourth connection reinforcement plates 423 are provided at one end of the fourth inner plate 42 that is not connected to the upper air deflector. A sixth nut with a strength grade of 6 is embedded in the fourth connection reinforcement plate 423, and the diameter of the sixth nut is 8mm.

In addition, the present application also provides a vehicle, including the above-mentioned air deflector assembly 100. The specific structure of the air deflector assembly 100 refers to the above-mentioned embodiment. Since the vehicle described in the present application adopts all the technical solutions of all the embodiments of the above-mentioned air deflector assembly, it at least has all the beneficial effects brought by the technical solutions of the above-mentioned embodiments, which will not be repeated here.

The technical solution of the present application is further described in detail in combination with specific embodiments. It should be understood that the following embodiments are only used to explain the present application, and are not used to limit the present application.

### First embodiment

(1) At 23 ° C, mixing 95g of PDCPD, 3g of tungsten chloride, and 2g of tetrachlorophenol to obtain a first composite.
(2) At 23 ° C, mixing 85g of PDCPD, 8g of aluminum alkyl, and 7g of tetrachlorophenol to obtain a second composite.
(3) At 23° C and 10MPa, mixing the first composite and the second composite in a volume ratio of 1:1 to obtain a mixed material liquid; during the mixing process, the flow rate of the first composite is 40L/min, and the flow rate of the second composite is 40L/min.
(4) At 0.3MPa, injecting the mixed material liquid into the molding chamber of the top air deflector mold, waiting for 20s, and stopping injecting; adjusting the deflection angle of the top air deflector mold to 45° at a vibration frequency of 10Hz, and waiting for 250s; decreasing the temperature of the male mold to 60°C and the temperature of the female mold to 70°C, adjusting the deflection angle of the top air deflector mold to 45° at a vibration frequency of 10Hz, waiting for 100s, and obtaining the top air deflector.
(5) Repeating step (4) to obtain the left upper air deflector, the right upper air deflector, the left lower air deflector and the right lower air deflector in turn, and assembling them to obtain the air deflector assembly.

### Second embodiment

(1) At 23 ° C, mixing 85g of PDCPD, 10g of tungsten chloride, and 5g of tetrachlorophenol to obtain a first composite.
(2) At 23 ° C, mixing 95g of PDCPD, 2g of aluminum alkyl, and 3g of tetrachlorophenol to obtain a second composite.
(3) At 23° C and 12MPa, mixing the first composite and the second composite in a volume ratio of 1:1 to obtain a mixed material liquid; during the mixing process, the flow rate of the first composite is 40L/min, and the flow rate of the second composite is 70L/min.
(4) At 0.5MPa, injecting the mixed material liquid into the molding chamber of the top air deflector mold, waiting for 25s, and stopping injecting; adjusting the deflection angle of the top air deflector mold to 50° at a vibration frequency of 10Hz, and waiting for 300s; decreasing the temperature of the male mold to 65°C and the temperature of the female mold to 75°C, adjusting the deflection angle of the top air deflector mold to 55° at a vibration frequency of 10Hz, waiting for 150s, and obtaining the top air deflector.
(5) Repeating step (4) to obtain the left upper air deflector, the right upper air deflector, the left lower air deflector and the right lower air deflector in turn, and assembling them to obtain the air deflector assembly.

### Third embodiment

(1) At 23 ° C, mixing 95g of PDCPD, 3g of tungsten chloride, and 2g of tetrachlorophenol to obtain a first composite.
(2) At 23 ° C, mixing 85g of PDCPD, 8g of aluminum alkyl, and 7g of tetrachlorophenol to obtain a second composite.
(3) At 23° C and 12MPa, mixing the first composite and the second composite in a volume ratio of 1:1 to obtain a mixed material liquid; during the mixing process, the flow rate of the first composite is 70L/min, and the flow rate of the second composite is 40L/min.
(4) At 0.6MPa, injecting the mixed material liquid into the molding chamber of the top air deflector mold, waiting for 25s, and stopping injecting; adjusting the deflection angle of the top air deflector mold to 50° at a vibration frequency of 20Hz, and waiting for 300s; decreasing the temperature of the male mold to 60°C and the temperature of the female mold to 70°C, adjusting the deflection angle of the top air deflector mold to 50° at a vibration frequency of 20Hz, waiting for 180s, and obtaining the top air deflector.
(5) Repeating step (4) to obtain the left upper air deflector, the right upper air deflector, the left lower air deflector and the right lower air deflector in turn, and assembling them to obtain the air deflector assembly.

### First comparative example

(1) At 23 ° C, mixing 95g of PDCPD, 3g of tungsten chloride, and 2g of tetrachlorophenol to obtain a first composite.
(2) At 23 ° C, mixing 85g of PDCPD, 8g of aluminum alkyl, and 7g of tetrachlorophenol to obtain a second composite.
(3) At 23° C and 10MPa, mixing the first composite and the second composite in a volume ratio of 1:1 to obtain a mixed material liquid; during the mixing process, the flow rate of the first composite is 40L/min, and the flow rate of the second composite is 40L/min.
(4) At 0.3MPa, injecting the mixed material liquid into the molding chamber of the top air deflector mold, waiting for 20s, and stopping injecting; waiting for 250s, decreasing the temperature of the male mold to 60°C and the temperature of the female mold to 70°C, waiting for 100s, and obtaining the top air deflector.
(5) Repeating step (4) to obtain the left upper air deflector, the right upper air deflector, the left lower air deflector and the right lower air deflector in turn, and assembling them to obtain the air deflector assembly.

### Second comparative example

(1) At 23 ° C, mixing 85g of PDCPD, 10g of tungsten chloride, and 5g of tetrachlorophenol to obtain a first composite.
(2) At 23 ° C, mixing 95g of PDCPD, 2g of aluminum alkyl, and 3g of tetrachlorophenol to obtain a second composite.
(3) At 23° C and 10MPa, mixing the first composite and the second composite in a volume ratio of 1:1 to obtain a mixed material liquid; during the mixing process, the flow rate of the first composite is 40L/min, and the flow rate of the second composite is 40L/min.
(4) At 0.3MPa, injecting the mixed material liquid into the molding chamber of the top air deflector mold, waiting for 20s, and stopping injecting; adjusting the deflection angle of the top air deflector mold to 45° , and waiting for 250s; and decreasing the temperature of the male mold to 60°C and the temperature of the female mold to 70°C, adjusting the deflection angle of the top air deflector mold to 45° , waiting for 100s, and obtaining the top air deflector.
(5) Repeating step (4) to obtain the left upper air deflector, the right upper air deflector, the left lower air deflector and the right lower air deflector in turn, and assembling them to obtain the air deflector assembly.

### Third comparative example

The upper air deflector, the left upper air deflector, the right upper air deflector, the left lower air deflector and the right lower air deflector prepared from the glass fiber reinforced plastic, and the specific production method can refer to the conventional means in the related art.

### Performance test

### (I) Appearance and tensile strength test

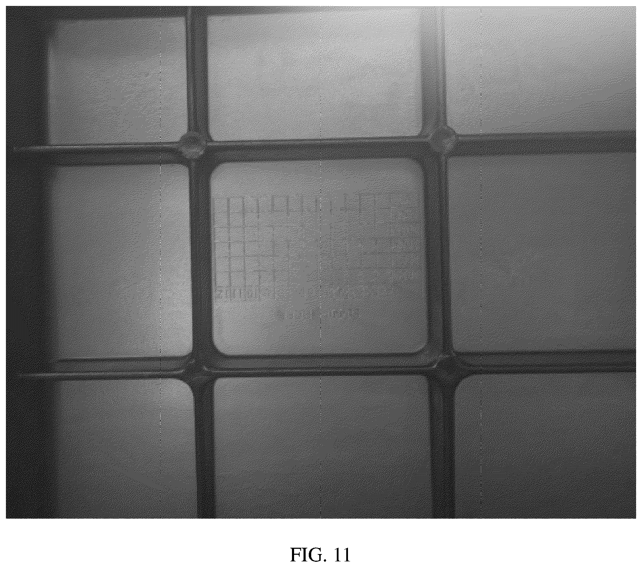

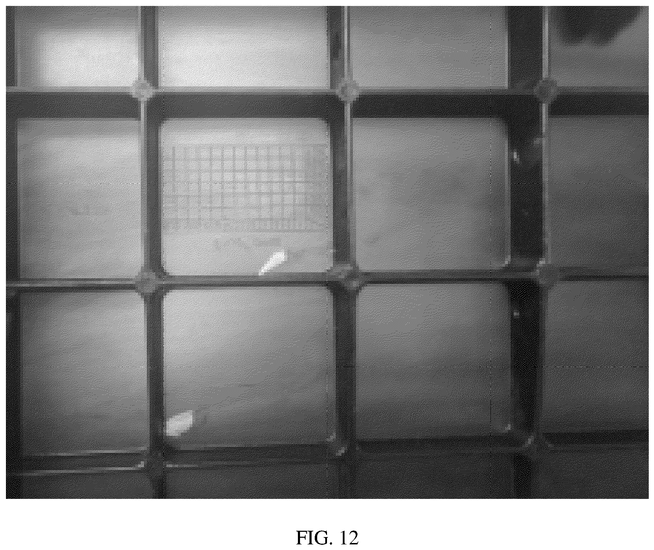

The appearances of the first embodiment to the third embodiment and the first comparative example to the second comparative example are checked, and their tensile strength is tested. The specific detection method can refer to the conventional means in the related art. The detection data are shown in Table 1. In addition, taking the top air deflector prepared in the embodiment and the comparative example as an example, the appearance of the top air deflector in the embodiment and the comparative example is shown in FIG. 11 and FIG. 12 respectively.

**Table 1: detection data**

| detection project | first embodiment | second embodiment | third embodiment | first comparative example | second comparative example |
|---|---|---|---|---|---|
| tensile strength ( MPa) | 50 | 55 | 60 | 42 | 45 |
| product performance | smooth and free of bubbles | smooth and free of bubbles | smooth and free of bubbles | a large number of bubbles | a small number of bubbles |

By comparing the first comparative example with the second comparative example, it is found that the second comparative example increases the tilt angle of the mold on the basis of first comparative example. By comparison, it is found that after the mold is tilted to a certain extent, the number of pores in the prepared product is significantly decreased, the surface quality of the product is also improved accordingly, and the tensile strength of the material is also improved. This is because the viscosity of the material liquid is very low, and the tilt of the mold to a certain angle is beneficial to the overflow of the pores, which can decrease the accumulation of pores in the material and improve the removal of pores.

By comparing the first embodiment with the second comparative example, it is found that first embodiment increases the mixing head pressure and increases the vibration of the mold on the basis of second comparative example. As a result, it is found that the surface appearance of the product is smooth and no bubbles appear inside. This is mainly because the increase in the mixing head pressure is conducive to the full mixing of the material liquid and decreases the bubble defects. At the same time, the increase in the vibration effect of the mold is more conducive to the removal of gas in the material liquid, which is beneficial to the improvement of product performance.

By comparing the first embodiment with the second embodiment, it is found that the second embodiment increases the tilt angle on the basis of the first embodiment. When the material liquid is filling the mold, the mold is tilted at a certain angle, which is beneficial to the overflow of gas, but it cannot be tilted too much, which will affect the removal of gas in the material liquid. By analyzing and controlling a certain tilt angle, it is beneficial to the removal of gas.

By comparing the second embodiment with the third embodiment, it is found that the third embodiment increases the vibration frequency on the basis of the second embodiment, because the reinforcement rib part in the product will hinder the flow of material liquid. The more intense the vibration frequency is, the more beneficial it is to the shrinkage marks of some reinforcement rib parts in the mold, which is conducive to the surrounding being completely filled with material flow, thereby eliminating the appearance of shrinkage marks at the joints.

In summary, referring to FIG. 11, FIG. 2 and Table 1, it can be concluded that: the greater the mixing head pressure, the more uniform the material liquid mixing, the fewer defects such as pores appearing in the molded parts, the better the appearance, and the higher the tensile strength of the product. In the case of a mold tilt vibration device, the probability of pores appears is decreased, and at the same time, the greater the tilt angle, the smoother the appearance, the fewer pores, and the higher the performance of the product. Similarly, the higher the vibration frequency, the smoother the appearance, the fewer defects, and the higher the performance of the parts. Therefore, the mixing head pressure, tilt angle, and vibration frequency are key factors affecting the surface and performance of the product.

### (II) Basic performance test

Based on the first embodiment, as for the rationality of the structural design of the left upper air deflector, the right upper air deflector, the left lower air deflector and the right lower air deflector prepared in the first embodiment, whether the assembly structure of which meets the design requirements can be determined by comprehensively analyzing the modal, stiffness, static strength, dynamic strength and other aspects of the structure. The specific operations are as follows:

### (1) Modal test analysis

The modal of the top air deflector, the left upper air deflector, the right upper air deflector, the left lower air deflector and the right lower air deflector prepared in first embodiment is analyzed. The specific analysis method refers to the conventional test method in this field to obtain the first 6-order modal and frequency structure. For specific test results, referring to Table 2.

**Table 2: results of the first 6-order modal vibration shapes and frequencies**

| order | PDCPD | | |
|---|---|---|---|
| | frequency (Hz) | weak parts of the vibration shape | target requirement |
| 1 | 16.66 | lower corner of the right lower air deflector | |
| 2 | 21.14 | top air deflector | |
| 3 | 28.3 | lower corner of the right lower air deflector | ≥ 15Hz |
| 4 | 31.96 | lower corner of the left lower air deflector | |
| 5 | 32.32 | lower corner of the right lower air deflector | |
| 6 | 33.38 | grille of the right lower air deflector | |

From Table 2, it can be concluded that the sixth-order modes are 16.66Hz, 21.14Hz, 28.3Hz, 31.96Hz, 32.32Hz, and 33.38Hz respectively, all of which meet the design requirements of being greater than or equal to 15Hz.

### (2) Stiffness test analysis

As for the top air deflector, the left upper air deflector, the right upper air deflector, the left lower air deflector, and the right lower air deflector prepared in the first embodiment are tested based on the modal vibration shape to find the weak parts, and a load of 150N is applied in the normal direction to obtain their stiffness. The specific detailed operation steps refer to the conventional test methods in this field, and the specific test results refer to Table 3.

**Table 3: results of the stiffness analysis**

| | weak parts of the vibration shape | PDCPD | |
|---|---|---|---|
| loading point | | maximum deformation | target value |
| 1 | lower corner of the right lower air deflector | 14.3 | ≤ 16mm |
| 2 | top air deflector | 10.454 | |
| 3 | lower corner of the right lower air deflector | 11.407 | |
| 4 | lower corner of the left lower air deflector | 8.83 | |
| 5 | lower corner of the right lower air deflector | 15.825 | |
| 6 | grille of the right upper air deflector | 15.909 | |

It can be concluded from Table 3 that the weak part of the first-order modal is at the lower corner of the right lower air deflector, and the maximum deformation obtained by the test is 14.3mm; the weak part of the second-order modal is at the top air deflector, and the maximum deformation obtained by the test is 10.454mm; the weak part of the third-order modal is at the lower corner of the right lower air deflector, and the maximum deformation obtained by the test is 11.407mm; the weak part of the fourth-order modal is at the lower corner of the lower left air deflector, and the maximum deformation obtained by the test is 8.83mm; the weak part of the fifth-order modal is at the lower corner of the right lower air deflector, and the maximum deformation obtained by the test is 15.825mm; the weak part of the sixth-order modal is at the grille of the right lower air deflector 2, and the maximum deformation obtained by the test is 15.909mm; all of them meet the design requirement of being less than or equal to 16mm.

### (3) Static strength test analysis

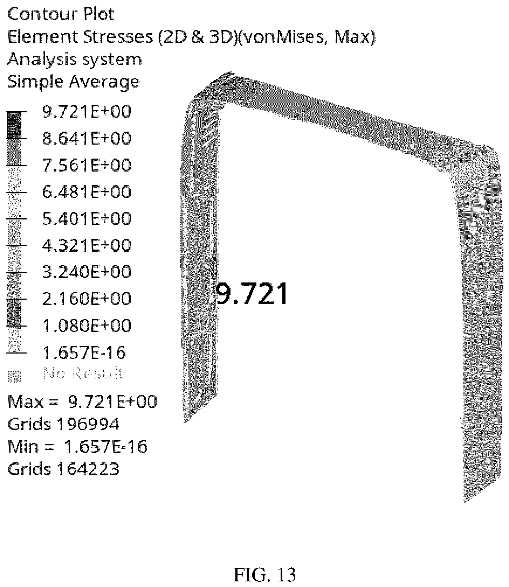

The static strength requirements are mainly based on four working conditions. The first working condition is the wind pressure condition, where a uniform pressure of 127N is applied to the top air deflector, and a uniform pressure of 86N is applied to the left upper air deflector, the right upper air deflector, the left lower air deflector, and the right lower air deflector; the second working condition is the X-direction condition, where 4.5G acceleration is applied to the X-direction and -1G acceleration is applied to the Z-direction; the third working condition is the Y-direction condition, where 4.5G acceleration is applied to the Y-direction and -1G acceleration is applied to the Z-direction; and the fourth working condition is the Z-direction condition, where -4.5G acceleration is applied to the Z-direction. The test results are shown in Table 4. In addition, taking the top guide assembly prepared in the first embodiment as an example, the maximum stress cloud diagram of the top air deflector assembly in the embodiment is shown in FIG. 13.

**Table 4: results of the static strength analysis**

| | working condition | PDCPD | | |
|---|---|---|---|---|
| analysis | | maximum stress | part | target value |
| static analysis | wind pressure working condition | 1.977 | lower corner of the right upper air deflector | ≤ 17MPa |
| | X-direction working condition | 4.368 | lower corner of the right upper air deflector | |
| | Y-direction working condition | 9.721 | lower corner of the right upper air deflector | |
| | Z-direction working condition | 3.7 | lower corner of the right upper air deflector | |

From Table 4 and FIG. 13, it can be concluded that under the wind pressure condition, the maximum stress of the air deflector assembly is 1.977MPa; under the X-direction condition, the maximum stress of the air deflector assembly is 4.368MPa; under the Y-direction condition, the maximum stress of the air deflector assembly is 9.721MPa; and under the Z-direction condition, the maximum stress of the air deflector assembly is 3.7MPa. The above data are all less than 17MPa, meeting the design requirement of the static strength of the deflector assembly product.

### (4) Dynamic strength test analysis

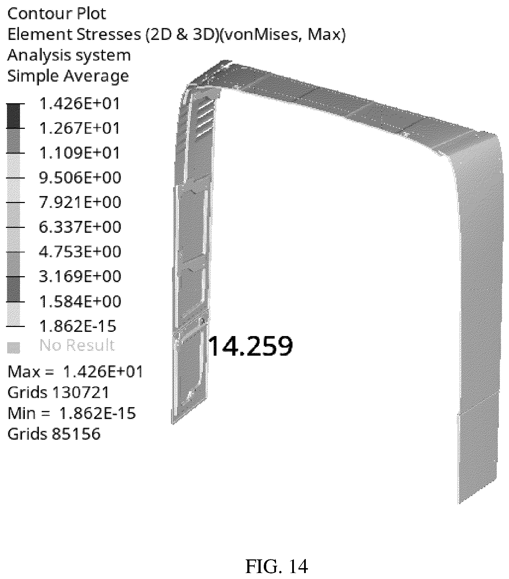

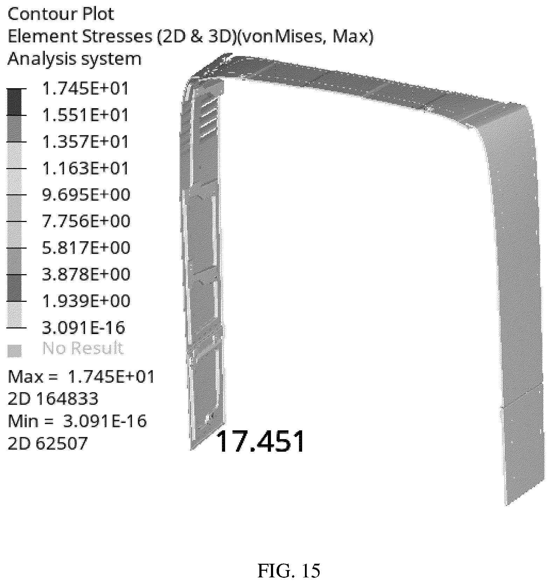

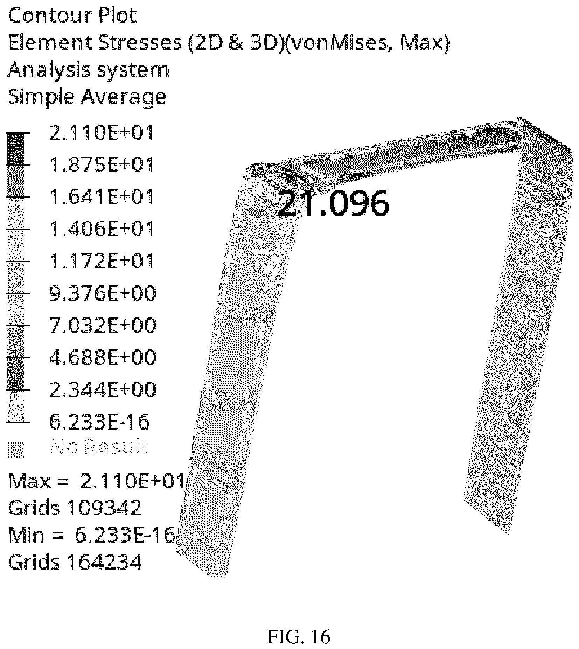

For the dynamic strength requirements, three working conditions are mainly considered. The first working condition is the X-direction vibration, where 1G vibration acceleration is applied to the X-direction of the air deflector assembly; the second working condition is the Y-direction vibration, where 1G vibration acceleration is applied to the Y direction of the air deflector assembly; and the third working condition is the Z-direction vibration, and -2G vibration acceleration is applied to the Z direction of the air deflector assembly. The test results are shown in the fifth table. In addition, taking the top guide assembly prepared in first embodiment as an example, the vibration cloud diagrams of the top air deflector assembly in first embodiment in the X, Y and Z directions are shown in FIG. 14, FIG. 15 and FIG. 16 respectively.

**Table 5: results of the dynamic strength analysis**

| analysis | working condition | PDCPD | | |
|---|---|---|---|---|
| | | maximum stress | part | target value |
| dynamic analysis | X-direction working condition | 14.259 | lower corner of the right lower air deflector | ≤25.5MPa |
| | Y-direction working condition | 17.451 | lower corner of the right upper air deflector | |
| | Z-direction working condition | 21.1 | corner of the top air deflector | |

It can be concluded from Table 5, FIG. 14, FIG. 15 and FIG. 16 that: under the X-direction vibration, the maximum stress of the reinforcement rib of the air deflector assembly is at the corner of the reinforcement rib of the right lower air deflector assembly, and the maximum stress is 14.259MPa; under the Y-direction vibration, the maximum stress of the reinforcement rib of the air deflector assembly is at the corner of the reinforcement rib of the right lower air deflector, and the maximum stress is 17.451MPa; under the Z-direction vibration, the maximum stress of the reinforcement rib of the air deflector assembly is at the corner of the reinforcement rib of the top air deflector, and the maximum stress is 21.1MPa. All of them meet the design requirement of being less than or equal to 25.5MPa.

### (5) Weight test analysis

Taking the air deflector assemblies prepared in the first embodiment and the third comparative example as examples, a weight analysis is performed, and the test results are shown in Table 6.

**Table 6: lightweight comparative analysis**

| serial number | name | quantity | third comparative example | first embodiment | lightweight effect |
|---|---|---|---|---|---|
| | | | SMC | PDCPD | |
| 1 | top air deflector | 1 | 6.95kg | 4.18kg | lose 39.85% of weight |
| 2 | right upper air deflector | 1 | 8.75kg | 5.52kg | lose 36.91% of weight |
| 3 | left/right lower air deflector | 2 | 8.36kg | 4.85kg | lose 41.98% of weight |
| 4 | left upper air deflector | 1 | 8.47kg | 5.82kg | lose 31.29% of weight |
| total weight | | | 32.53kg | 20.37kg | lose 37.38% of weight |

It can be concluded from Table 6 that the top air deflector in the first embodiment can achieve a weight decrease of 39.85% compared with the top air deflector in the third comparative example, the right upper air deflector in the first embodiment can achieve a weight decrease of 36.91% compared with the right upper air deflector in the third comparative example, the left upper air deflector in the first embodiment can achieve a weight decrease of 36.91% compared with the left upper air deflector in the third comparative example, and the left/right lower air deflector in the first embodiment can achieve a weight decrease of 41.98% compared with the left/right lower air deflector in the third comparative example. The weight decrease of the assembly is more than 37%, meeting the lightweight requirements.

In summary, the air deflector assembly structural design provided in the present application meets the design requirements of commercial vehicle products, achieves the goals of weight decrease and high performance, and can be widely used in the current commercial vehicle market. For air deflector products, its unique structural optimization and process manufacturing optimization and improvement can make up for the disadvantage of insufficient strength of lightweight materials, and provide direct technical support for lightweighting of commercial vehicles.

The above are embodiments of the present application, and are not intended to limit the scope of the present application. Under the inventive concept of the present application, any equivalent structural transformations made by using the contents of the description and drawings of the present application, or direct/indirect applications in other related technical fields, are included in the scope of the present application.

## Claims

1. A lightweight material, **characterized by** comprising
a first composite; and
a second composite,
wherein taking a mass of the first composite as 100%, the first composite comprises 85% to 95% of a first compound, 3% to 10% of a first main catalyst and 2% to 5% of a second main catalyst, and the first compound comprises a polydicyclopentadiene; and
taking a mass of the second composite as 100%, the second composite comprises 85% to 95% of a second compound, 2% to 8% of a first sub catalyst and 3% to 7% of a second sub catalyst, and the second compound comprises the polydicyclopentadiene.

2. The lightweight material according to claim 1, wherein a volume ratio of the first composite to the second composite is (0.92:1) to (1:0.89).

3. The lightweight material according to claim 1, wherein the first main catalyst comprises a tungsten-based catalyst, and the tungsten-based catalyst comprises a tungsten chloride; and/or
the second main catalyst comprises a first phenol compound, and the first phenol compound comprises a tetrachlorophenol.

4. The lightweight material according to claim 1, wherein the first sub catalyst comprises an aluminum-based metal compound, and the aluminum-based metal compound comprises an aluminum alkyl; and/or
the second sub catalyst comprises a second phenol compound, and the second phenol compound comprises a tetrachlorophenol.

5. A method for producing an air deflector, **characterized in that** the air deflector is made from the lightweight material according to any one of claims 1 to 4, and the method for producing the air deflector comprises:
mixing (S10) a first compound, a first main catalyst and a second main catalyst to obtain a first composite;
mixing (S20) a second compound, a first sub catalyst and a second sub catalyst to obtain a second composite;
mixing (S30) the first composite and the second composite to obtain a mixed material liquid; and
injecting (S40) the mixed material liquid into a mold, filling the mold, dwelling in the mold and curing in sequence to obtain the air deflector.

6. The method according to claim 5, wherein a reaction temperature of the first composite obtained by mixing the first compound, the first main catalyst and the second main catalyst is 20 °C to 25°C; and/or
a reaction temperature of the second composite obtained by mixing the second compound, the first sub catalyst and the second sub catalyst is 20°C to 25°C.

7. The method according to claim 5, wherein the mixing the first composite and the second composite to obtain the mixed material liquid comprises:
under a condition of 20° C to 25° C and 10MPa to 12MPa, flowing the first composite and the second composite to a mixing instrument at a flow rate of 40L/min to 70L/min, stirring and mixing, and obtaining the mixed material liquid.

8. The method according to claim 5, wherein the mold comprises a male mold and a female mold; and
the injecting the mixed material liquid into the mold, filling the mold, dwelling in the mold and curing in sequence to obtain the air deflector comprises:
(S401), under a condition of 0.3MPa to 0.6MPa, injecting the mixed material liquid into a molding chamber of the mold, waiting for 20s to 25s, and stopping injecting;
(S402), adjusting a deflection angle of the mold to 45° to 55° at a vibration frequency of 10Hz to 20Hz, and waiting for 250s to 300; and
(S403), decreasing a temperature of the male mold to 60°C to 70°C and a temperature of the female mold to 70°C to 80°C, adjusting a deflection angle of the mold to 45° to 55° at the vibration frequency of 10Hz to 20Hz, waiting for 100s to 180s, and obtaining the air deflector.

9. An air deflector assembly (100), **characterized by** comprising:
a top air deflector (1);
two upper air deflectors opposite to each other, wherein one end of each of the two upper air deflectors is fixedly connected to two ends of the top air deflector (1) respectively; and
two lower air deflectors (4) opposite to each other, wherein each of the two lower air deflectors (4) is fixedly connected to the other end of each of the two upper air deflectors respectively;
wherein all of the top air deflector (1), the two upper air deflectors and the two lower air deflectors (4) are made from the lightweight material according to any one of claims 1 to 4; or
all of the top air deflector (1), the two upper air deflectors and the two lower air deflectors (4) are made by the method for producing the air deflector according to any one of claims 5 to 8.

10. The air deflector assembly (100) according to claim 9, wherein the top air deflector (1) comprises a first inner plate (12) and a first outer plate (11) glued to the first inner plate (12), wherein
one side of the first outer plate (11) towards the first inner plate (12) is provided with a first reinforcement rib (111) extending along a force transferring route of the first outer plate (11), a plurality of first connection reinforcement plates (112) are provided at both ends of the first outer plate (11) along a length direction of the first outer plate (11), and a plurality of first bracket reinforcement plates (113) are provided at one end of both ends of the first outer plate (11) along a width direction of the first outer plate (11); and
the first inner plate (12) is provided with a first recessed groove (121) matched with the first reinforcement rib (111), a second bracket reinforcement plate (122) corresponding to the first bracket reinforcement plate (113) is provided at one end of both ends of the first inner plate (12) along a width direction of the first inner plate (12), and a plurality of third bracket reinforcement plates (123) are provided at the other end of both ends of the first inner plate (12).

11. The air deflector assembly (100) according to claim 9, wherein the two upper air deflectors comprise a left upper air deflector (2) and a right upper air deflector (3), the left upper air deflector (2) comprises a second outer plate (21) and a second inner plate (22) glued to the second outer plate (21), and the right upper air deflector (3) comprises a third outer plate (31) and a third inner plate (32) glued to the third outer plate (31).

12. The air deflector assembly (100) according to claim 11, wherein the second outer plate (21) is provided with two second reinforcement ribs (211) extending along a length direction of the second outer plate (21) and a plurality of third reinforcement ribs (212) extending along a width direction of the second outer plate (21), the two second reinforcement ribs (211) are provided at intervals, the plurality of third reinforcement ribs (212) are provided at intervals between the two second reinforcement ribs (211), and a plurality of second connection reinforcement plates (213) are provided at both ends of the second outer plate (21) extending along the length direction of the second outer plate (21); and/or
the second inner plate (22) is provided with a second recessed groove (221) extending along a force transferring route of the second inner plate (22), the second recessed groove (221) is enclosed to form a force-bearing area, and the force-bearing area is provided with a plurality of fourth reinforcement ribs (222) extending along a width direction of the second inner plate (22).

13. The air deflector assembly (100) according to claim 11, wherein the third outer plate (31) comprises a first connection plate (311) and a second connection plate (312) provided along a length direction of the third outer plate (31), and a radiator grille (3111) is provided at the first connection plate (311);
the second connection plate (312) is provided with two fifth reinforcement ribs (313) provided at intervals and extending along a length direction of the second connection plate (312), and a plurality of sixth reinforcement ribs (314) extending along a width direction of the second connection plate (312);
the plurality of sixth reinforcement ribs (314) are provided at intervals between the two fifth reinforcement ribs (313), and a plurality of third connection reinforcement plates (315) are provided at opposite ends of the first connection plate (311) and the second connection plate (312); and/or
the third inner plate (32) comprises a horizontal plate (321) extending along a width direction of the third outer plate (31), a third connection plate (322) and a vertical plate (323), and a first reinforcement slot (324) is formed on the horizontal plate (321) and extends along a width direction of the horizontal plate (321);
the third connection plate (322) is provided with two second reinforcement slots (325) provided at intervals and extending along a length direction of the third connection plate (322), and a plurality of third reinforcement slots (326) extending along a width direction of the third connection plate (322) and provided at intervals between the two second reinforcement slots (325); and
the vertical plate (323) extends along a length direction of the third outer plate (31) and is connected between the horizontal plate (321) and the third connection plate (322), and the vertical plate (323) is provided with a plurality of seventh reinforcement ribs (327) extending along a width direction of the vertical plate (323).

14. The air deflector assembly (100) according to claim 9, wherein each of the lower air deflectors (4) comprises a fourth outer plate (41) and a fourth inner plate (42) glued to the fourth outer plate (41);
the fourth outer plate (41) is provided with two eighth reinforcement ribs (411) extending along a length direction of the fourth outer plate (41) and provided at intervals and two ninth reinforcement ribs (412) provided at intervals along a width direction of the fourth outer plate (41), one of the two ninth reinforcement ribs (412) is connected to ends of the two eighth reinforcement ribs (411), and the other one of the two ninth reinforcement ribs (412) is connected to a middle of the two eighth reinforcement ribs (411); and
the fourth inner plate (42) is provided with a fourth recessed groove (421) corresponding to the two eighth reinforcement ribs (411) and the two ninth reinforcement ribs (412), and the fourth recessed groove (421) is provided with a plurality of fourth bracket reinforcement plates (422) provided at intervals.

15. A vehicle, **characterized by** comprising the air deflector assembly (100) according to any one of claims 9 to 14.
